# EUROPEAN PATENT SPECIFICATION

(11) **EP 4 155 016 B1**
(45) Date of publication and mention of the grant of the patent: **09.07.2025**
(21) Application number: 21809185.8
(22) Date of filing: 12.05.2021
(51) Int. Cl.: B23B 51/02, B23B 51/00

(54) **TWIST DRILL WITH ALLOY TOOL BIT**
SPIRALBOHRER MIT LEGIERUNGSWERKZEUGSPITZE
FORET HÉLICOÏDAL AVEC UN INSERT EN ALLIAGE

(30) Priority: 17.05.2020 CN 202010428158; 17.05.2020 CN 202010428191; 17.05.2020 CN 202010428157; 17.05.2020 CN 202010428124; 17.05.2020 CN 202010428080; 17.05.2020 CN 202010428122; 17.05.2020 CN 202010428077; 17.05.2020 CN 202010428078
(43) Date of publication of application: 29.03.2023
(73) Proprietor: Shandong Xingong Cutting Tools Co., Ltd., Shandong 271219 (CN); Shandong Old Roughneck Machinery Technology Co., Ltd., Shandong 271099 (CN)
(72) Inventor: LI, Shiqing, Shandong 271219 (CN)
(74) Representative: Paustian & Partner Patentanwälte mbB
(86) International application number: PCT/CN2021/000099
(87) International publication number: WO 2021/232823

(56) References cited:
- CN-A- 103 381 496
- CN-A- 103 706 845
- CN-A- 108 262 506
- CN-A- 108 262 506
- CN-A- 111 730 111
- CN-A- 112 139 569
- CN-A- 112 139 570
- CN-A- 112 139 571
- CN-A- 112 191 893
- CN-A- 112 191 894
- CN-A- 112 453 504
- DE-A1- 102014 010 922
- US-A1- 2010 092 259

## Description

### TECHNICAL FIELD

The present disclosure relates to a twist drill with an alloy tool bit. The twist drill with the alloy tool bit is used in a drilling and milling process of machining and bench worker maintenance. The new machining theories consider that the cutting efficiency of a segmented stepwise cutting edge is high. However, after the stepwise cutting edge is gradually extended, the effect of the stepwise cutting edge is obviously reduced. Therefore, the theories are still not truly correct theories.

### BACKGROUND

At present, the drilling tool used in machining is composed of a chisel edge, a cutting edge, a spiral cutting edge and a side edge. The cutting edge is located on a spiral cutting surface and is of a single co-located cutting structure. The cutting edge is in the centrifugal force conduction range of rotary cutting. The cutting edge is subjected to rotary cutting force and centrally outward conduction force at the same time. The cutting edge at the intersection of the cutting edge and the spiral cutting edge is always easy to damage under the action of double forces. An existing hole machining tool swings due to the fact that the structure is not absolutely balanced during drilling. The spiral cutting surface and the spiral cutting edge are damaged due to the fact that the tool is stabilized only through the spiral cutting surface. People generally think that the smoother the surface is, the higher the strength is. According to new theories, the strength of the surface with tiny gaps is higher, but essential structural characteristics of the substance are not revealed, so that the existing hole machining tool is low in efficiency, easy to damage, low in stability and low in drilling precision.

CN 103 381 496 A discloses a twist drill with an alloy tool bit.

### SUMMARY

The present disclosure aims to provide a twist drill with an alloy tool bit in view of the above-mentioned problems. The tool has the function of blocking conduction force, and is high in heat dissipation efficiency and strength and long in service life. The tool is easy to position in the drilling process, and the drilling precision is high. People generally thought that the smoother the surface is, the higher the strength is. According to new theories in recent years, the strength of the surface with tiny gaps is higher, but essential structural characteristics of the substance are not revealed. Under the condition that two solids are the same in volumes, the surface area of the dispersed small-volume solid is larger than the surface area of the whole solid. When the whole structure of the solid reaches a certain volume limit, even diamond is broken. The sum of the stress strengths of the small-size solids is far larger than the stress strength of the whole solid under the condition of volume stress. Experiments verify that on a cutting tool in a conventional physical state, the millimeter magnitude has the most obvious high-strength characteristic, namely the millimeter strength. The twist drill with an alloy tool bit is applied in millimeter strength.

In order to achieve the above purpose, there is provided a twist drill with an alloy tool bit according to the independent claim 1. Preferable embodiments are further defined in the dependent claims 2-14.

The twist drill with the alloy tool bit has the following beneficial effects.

In a contrast experiment carried out on a drilling machine, a twist drill with the diameter of 20.0 is used for the experiment. Heat treatment and production in the same batch are carried out at the same time. A drilling object is a forged and tempered gear finish turning machining value, the drilling depth is 35 mm, and blind holes are formed. Under the condition that the rotating speed and the feed amount of an alloy head twist drill with a common structure reach the limit, the rotating speed of the twist drill with an alloy tool bit can be increased by 40%, the feed amount is improved by 40%, and the comprehensive drilling efficiency is improved by more than one time. The number of drilling holes in the twist drill with an alloy tool bit is increased by more than ten times compared with that of a twist drill with a common structure.

### BRIEF DESCRIPTION OF THE DRAWINGS

The technical schemes and advantages of the present disclosure are explained in detail by reference to the attached figures.
FIG. 1 is a schematic diagram of a twist drill with an alloy tool bit in the first embodiment of the present disclosure.
FIG. 2 is a schematic diagram of a twist drill with an alloy tool bit in the second embodiment of the present disclosure.

### DETAILED DESCRIPTION OF THE EMBODIMENTS

Preferred embodiments of the twist drill with an alloy tool bit in the present disclosure are described in detail with reference to the attached figures. In the embodiments, the twist drill with the alloy tool bit is mainly described as an example of a tool with two spiral tool bodies integrally.

### Embodiment I

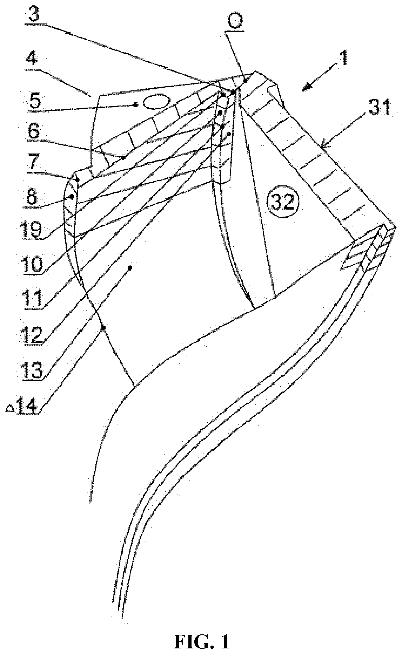

As shown in FIG. 1, the twist drill with the alloy tool bit 1 relates to a drilling tool for machining. The twist drill with an alloy tool bit is integrally composed of a tool shank (not shown) comprising a taper shank or a straight shank, and a spiral tool body 4. Grooves are milled on the front spiral cutting surfaces of at least two spiral tool bodies 4, and an alloy tool bit 31 is arranged on the front spiral cutting surface integrally or in a connected mode. A cutting surface 13 at the front end in the rotating direction is integrally formed on the alloy tool bit 31 along the axial center of the twist drill with an alloy tool bit 1. The spiral cutting surfaces 13 integrally arranged on the two sides of the two spiral tool bodies 4 and the two cutting surfaces 13 integrally arranged with the alloy tool bit 31 are arranged in the same groove respectively.

The twist drill with an alloy tool bit 1 is integrally provided with two spiral tool bodies 4. The surface of the alloy tool bit 31 of each spiral tool body 4 in the cutting direction is a cutting surface. The surface on the outer side of the backward cutting surface 13 in the rotating direction is a secondary cutting surface 8. The cutting surface 13 is intersected with the secondary cutting surface 8 to form a spiral cutting edge. The surface on the back side of the axial front end of the cutting surface 13 is a rear cutting surface 5. The rear cutting surfaces on at least two sides are intersected to form a chisel edge. The two ends of the chisel edge are chamfered to form a chamfer surface 22 and a chamfer edge 2. The cutting surface 13 is intersected with the rear cutting surface 5 to form a cutting edge 6. The secondary cutting surface 8 is intersected with the rear cutting surface 5 to form a side edge 7. The spiral cutting edge 14 extends to the alloy tool bit 31 to form a secondary cutting edge. The spiral secondary cutting surface 8 extends to the alloy tool bit 31 to form a secondary cutting surface 8 of the alloy tool bit 31.

Near the axial center O on the inner side of the cutting surface 13 of the alloy tool bit 31 of the twist drill with an alloy tool bit 1, a central stepped platform 10 with millimeter strength is arranged in a standing mode and a central stepped surface 12 is arranged in a protruding mode. The central stepped platform 10 with millimeter strength is connected to the cutting surface 13 of the alloy tool bit 31 in a standing mode. The central stepped platform 10 with millimeter strength on the alloy tool bit 31 is intersected with the central stepped surface 12 to form a central edge 11 with millimeter strength. The central stepped platform 10 with millimeter strength on the alloy tool bit 31 and the front end of the central stepped surface 12 extending along the axial direction are intersected with the rear cutting surface 5 to form a side micro edge 19 and a cutting middle edge 3. The width of the central stepped surface 12 on the alloy tool bit 31 is from the axial center to the cutting surface 13 which is smaller than or equal to one third of the radius of the twist drill with an alloy tool bit 1.

Through the arrangement, process holes are formed firstly and then drilling is conducted in the drilling process. Due to the fact that the process holes are formed in the same tool, high stability is achieved. Compared with a common reamer, the tool has the advantages of being more stable and efficient

In a contrast experiment carried out on a drilling machine, a twist drill with the diameter of 20.5 is used for the experiment. Heat treatment and production in the same batch are carried out at the same time on the same material of hard alloy. A drilling object is a forged and tempered gear finish turning machining value, the drilling depth is 35 mm, and blind holes are formed. Under the condition that the rotating speed and the feed amount of a hard twist drill with an alloy tool bit with a common structure reach the limit, the rotating speed of the twist drill with an alloy tool bit 1 in the present disclosure can be increased by 40%, the feed amount is improved by 40%, and the comprehensive drilling efficiency is improved by 0.96 time. 731 drilling holes are formed in the twist drill with an alloy tool bit 1 with a common structure. 7698 drilling holes are formed in the twist drill with an alloy tool bit 1. The number of drilling holes in the twist drill with an alloy tool bit is increased by more than ten times compared with that of a twist drill with a common structure.

### Embodiment II

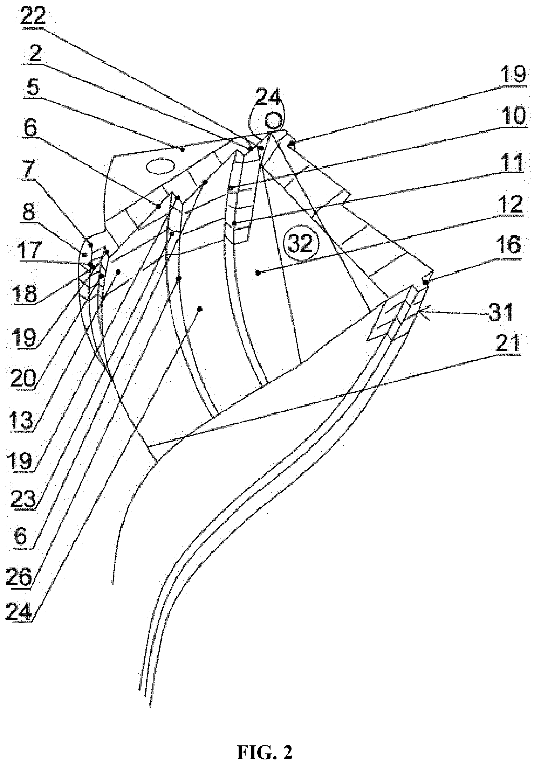

As shown in FIG. 2, the twist drill with an alloy tool bit 1 with combined edges in the second embodiment of the present disclosure is comprehensively applied on the basis of the first embodiment. A central stepped platform 10 with millimeter strength is arranged in a standing mode and a central stepped surface 12 is convexly arranged on the inner side of the spiral cutting surface 13 of the twist drill with an alloy tool bit 1 with combined edges near the axial center O. The central stepped platform 10 with millimeter strength is connected to the cutting surface 13 in a standing mode. The central stepped platform 10 with millimeter strength is intersected with the central stepped surface 12 to form a central edge 11 with millimeter strength. The cutting surface 13, the central stepped platform 10 with millimeter strength and the front end of the central stepped surface 12 extending along the axial direction are intersected with the rear cutting surface 5 to form a side micro edge 19 and a cutting middle edge 3. The central stepped surface 12 is arranged on the inner side of the central stepped platform 10 with millimeter strength protruding in the rotating direction.

A branch hole table 23 with millimeter strength convexly arranged in a stepwise manner and a branch cutting surface 24 are formed on the cutting surface 13 of the twist drill with an alloy tool bit 1 with combined edges from the axial center to the center of the radius of the secondary cutting surface 8 and on the spiral line extending along the spiral cutting edge in parallel at the center of the radius or near the radius. The branch hole table 23 with millimeter strength is connected to the cutting surface 13 in a standing mode. The branch cutting surface 24 is intersected with the branch hole table 23 with millimeter strength to form a branch cutting edge 26. The branch cutting surface 24 and the branch hole table 23 with millimeter strength are intersected with the rear cutting surface 5 to form a cutting edge 6 and a side micro edge 19. The cutting surface 13 protruding on the inner side of the upper part of the branch hole table 23 with micro-strengthening technology is the branch cutting surface 24.

A micro cutting surface 18 with millimeter strength is concavely formed on the cutting surface 13 of the alloy tool bit 31 from the micro cutting edge 17 along the outer periphery of the alloy tool bit 31 toward the axial center direction on the twist drill with an alloy tool bit 1 with combined edges. A micro-strengthening stress extension table 20 with millimeter strength is formed on the inner side of the micro cutting surface 18 of the alloy tool bit 31 of the twist drill with an alloy tool bit 1 with combined edges in a standing mode. The micro cutting surface 18 with millimeter strength is intersected with the secondary cutting surface 8 on the outer periphery to form a micro cutting edge 17 with millimeter strength. The micro cutting surface 18 with millimeter strength is intersected with the rear cutting surface 5 to form a cutting micro edge 16 with millimeter strength. The micro-strengthening stress extension table 20 with millimeter strength is intersected with the rear cutting surface 5 to form a side micro edge 19 with millimeter strength.

As shown in FIG. 2, the embodiment of the present disclosure is comprehensively applied on the basis of the first embodiment. At least one standing step and at least one protruding rear cutting surface 5 are arranged on the rear cutting surface 5 where the alloy tool bit of the twist drill with an alloy tool bit is located from the axial center in such a manner that the height of the rear cutting surface 5 in the direction of an outer side edge 7 is reduced. The standing step is intersected with the cutting surface 13 at the front end in the rotating direction to form at least one standing step edge. The at least one protruding rear cutting surface 5 is intersected with the cutting surface 13 at the front end in the rotating direction to form at least one protruding cutting edge 6.

Or, more standing steps and more protruding rear cutting surfaces 5 are arranged on the rear cutting surface 5 where the alloy tool bit of the twist drill with an alloy tool bit is located from the axial center in such a manner that the height of the rear cutting surface 5 in the direction of an outer side edge 7 is reduced. The more standing steps are intersected with the cutting surface 13 at the front end in the rotating direction to form more standing step edges. The more protruding rear cutting surfaces 5 are intersected with the cutting surface 13 at the front end in the rotating direction to form more protruding cutting edges 6.

Or, at least one notch edge is arranged on the cutting edge 6 of the alloy tool bit 31 of the twist drill with an alloy tool bit 1, and the notch edge extends toward the rear cutting surface to form a groove.

Or, more notch edges can be arranged on the cutting edge 6 of the alloy tool bit 31 of the twist drill with an alloy tool bit 1, and each notch edge extends toward the rear cutting surface to form a groove.

Or, at least one or more standing steps and at least one or more protruding rear cutting surfaces 5 are arranged on the rear cutting surface 5 where the alloy tool bit of the twist drill with an alloy tool bit is located from the axial center in such a manner that the height of the rear cutting surface 5 in the direction of an outer side edge 7 is reduced. The at least one or more standing steps are intersected with the cutting surface 13 at the front end in the rotating direction to form at least one or more standing step edges. The at least one or protruding rear cutting surfaces 5 are intersected with the cutting surface 13 to form at least one protruding cutting edges 6. At least one or more notch edges are arranged on the at least one or more stepwise alloy tool bit cutting edges 6. Each notch edge extends toward the rear cutting surface to form a groove.

In a contrast experiment carried out on a drilling machine, a twist drill with the diameter of 10.5 is used for the experiment. Heat treatment and production in the same batch are carried out at the same time on the same material of hard alloy. A drilling object is a forged and tempered gear finish turning machining value, the drilling depth is 35 mm, and blind holes are formed. Under the condition that the rotating speed and the feed amount of a twist drill with a common structure reach the limit, the rotating speed of the twist drill with an alloy tool bit in the present disclosure can be increased by 40%, the feed amount is improved by 40%, and the comprehensive drilling efficiency is improved by 0.96 time. 526 drilling holes are formed in the alloy twist drill with a common structure. 5316 drilling holes are formed in the twist drill with an alloy tool bit with combined edges. The number of drilling holes in the twist drill with an alloy tool bit is increased by more than ten times compared with that of a twist drill with a common structure.

According to experimental results, the use efficiency of the twist drill is obviously and greatly improved, the service life of the twist drill is obviously and greatly prolonged, and various structures of the twist drill are proved to be effective modes for prolonging the service life and improving the efficiency.

The twist drill with an alloy tool bit is comprehensively applied on the basis of the first embodiment and the second embodiment. The included angle formed by intersecting the cutting edge 6 of the alloy tool bit 31 on the outermost side of the twist drill with an alloy tool bit 1 with the spiral secondary cutting edge 14 is an acute angle; or the included angle formed by intersecting the cutting edge of the alloy tool bit 31 on the outermost side of the twist drill with an alloy tool bit with the spiral secondary cutting edge 14 is a right angle; or the included angle formed by intersecting the cutting edge 6 of the alloy tool bit 31 on the outermost side of the twist drill with an alloy tool bit with the spiral secondary cutting edge 14 is an obtuse angle.

The rear cutting surfaces 5 on the two sides of the alloy tool bit 31 of the twist drill with an alloy tool bit 1 are intersected in the axial center to form a chisel edge, and a chamfer surface 22, a chamfer edge 2 and a shrunk chisel edge are formed through chamfering.

Cooling holes 32 are integrally formed in a tool shank and a spiral tool body of the twist drill with an alloy tool bit 1.

A tool shank (not shown) of the twist drill with an alloy tool bit 1 is a straight shank; or a tool shank (not shown) of the twist drill with an alloy tool bit 1 is a taper shank.

Although the tool with two spiral tool bodies 4 has been described above as an example, the tool in the present disclosure also can be provided with a plurality of spiral tool bodies 4, and a combination of the structure in the embodiments and other various forms thereof may be used on each spiral tool body 4.

The preferred embodiments described above are illustrative and not restrictive. The present disclosure may be implemented and embodied in other ways without departing from the essential characteristics of the present disclosure, the scope of which is defined by the claims. All variations that come within the scope of the claims are intended to fall within the scope of the present disclosure.

### Reference signs in the drawings :

1, twist drill with alloy tool bit
2, chamfer edge
3, cutting middle edge
4, spiral tool body
5, rear cutting surface
6, cutting edge
7, side edge
8, secondary cutting surface
10, central stepped platform
11, central edge
12, central stepped surface
13, cutting surface
14, secondary cutting edge
16, cutting micro edge
17, micro cutting edge
18, micro cutting surface
19, side micro edge
20, micro-strengthening stress extension table
22, chamfer surface
23, branch hole table
24, branch cutting surface
26, branch cutting edge
31, alloy tool bit
O, sharp edge

## Claims

1. A twist drill (1) with an alloy tool bit (31), comprising a tool shank, a spiral tool body (4) and an alloy tool bit (31), wherein the twist drill with the alloy tool bit is integrally provided with at least two spiral tool bodies (4), the surface of each spiral tool body (4) in the cutting direction is a spiral cutting surface (13), the surface on the outer side of the backward spiral cutting surface (13) in the rotating direction is a spiral secondary cutting surface (8), the spiral cutting surface (13) is intersected with the spiral secondary cutting surface (8) to form a spiral cutting edge (14),
the surface on the back side of the axial front end of the spiral cutting surface (13) is a rear cutting surface (5), the rear cutting surfaces (5) on at least two sides are intersected to form a chisel edge, the spiral cutting surface (13) is intersected with the rear cutting surface (5) to form a cutting edge (6), and the spiral secondary cutting surface (8) is intersected with the rear cutting surface (5) to form a side edge (7);
the twist drill with the alloy tool bit is integrally composed of the tool shank and the spiral tool body (4), a groove is milled on the front spiral cutting surface (13) of the spiral tool body (4), the alloy tool bit (31) is integrally arranged on the front spiral cutting surface, the spiral cutting surfaces (13) on the two sides and a cutting surface (13) of the alloy tool bit are arranged in the same groove respectively, the spiral cutting edge (14) extends to the alloy tool bit to form a secondary cutting edge (14), and the spiral secondary cutting surface (8) extends to the alloy tool bit to form a secondary cutting surface (8);
a central stepped platform (10) is arranged on the cutting surface (13) near the axial center of the alloy tool bit of the twist drill with the alloy tool bit in a standing mode; a central stepped surface (12) is arranged on the inner side of the central stepped platform (10) protruding in the rotating direction; the central stepped platform (10) is intersected with the rear cutting surface (5) to form a side micro edge (19); the central stepped platform (10) is intersected with the central stepped surface (12) to form a central edge (11); the rear cutting surface (5) is intersected with the central stepped surface (12) to form a cutting middle edge (3); and
**characterised in that** the width of the central stepped surface (12) on the alloy tool bit from the axial center to the cutting surface (13) is smaller than or equal to one third of the radius of the twist drill with the alloy tool bit.

2. The twist drill with the alloy tool bit according to claim 1, wherein a branch hole table (23) is concavely arranged on the cutting surface (13) of the secondary cutting edge (14) on the alloy tool bit of the twist drill with the alloy tool bit in a stepwise manner from the axial center to the outer periphery; the inner side of the branch hole table (23) protrudes to form a branch cutting surface (24), the branch cutting surface (24) is intersected with the rear cutting surface (5) to form the cutting edge (6); the branch hole table (23) is intersected with the rear cutting surface (5) to form a side micro edge (19); the branch hole table (23) is intersected with the cutting surface (13) protruding on the inner side to form a branch cutting edge (26); and
the branch cutting surface (24) from the axial center to the cutting surface (13) is larger than or equal to one third of the radius of the twist drill with the alloy tool bit and smaller than or equal to two thirds of the radius of the twist drill with the alloy tool bit.

3. The twist drill with the alloy tool bit according to claim 1, wherein a micro cutting surface (18) is concavely formed on the cutting surface (13) of the alloy tool bit from the secondary cutting edge (14) toward the axial center direction on the cutting surface (13) of the alloy tool bit of the twist drill with the alloy tool bit (1); a micro-strengthening stress extension table (20) is formed on the inner side of the micro cutting surface (18) in a standing mode; the micro cutting surface (18) is intersected with the secondary cutting surface (8) on the outer periphery to form a micro cutting edge (17); the micro cutting surface (18) is intersected with the rear cutting surface (5) to form a cutting micro edge (16); and the micro-strengthening stress extension table (20) is intersected with the rear cutting surface (5) to form a side micro edge (19).

4. The twist drill with the alloy tool bit according to claim 1, wherein a branch hole table (23) is concavely arranged on the cutting surface (13) of the secondary cutting edge (14) on the alloy tool bit of the twist drill with the alloy tool bit in a stepwise manner from the axial center to the outer periphery integrally; the inner side of the branch hole table (23) protrudes to form a branch cutting surface (24), the branch cutting surface (24) is intersected with the rear cutting surface (5) to form the cutting edge (6); the branch hole table (23) is intersected with the rear cutting surface (5) to form a side micro edge (19); the branch hole table (23) is intersected with the cutting surface (13) protruding on the inner side to form a branch cutting edge (26).

5. The twist drill with the alloy tool bit according to claim 1, wherein a micro cutting surface (18) is concavely formed on the cutting surface (13) of the alloy tool bit from the secondary cutting edge (14) toward the axial center direction on the cutting surface (13) of the alloy tool bit of the twist drill with the alloy tool bit integrally; a micro-strengthening stress extension table (20) is formed on the inner side of the micro cutting surface (18) in a standing mode; the micro cutting surface (18) is intersected with the secondary cutting surface (8) on the outer periphery to form a micro cutting edge (17); the micro cutting surface (18) is intersected with the rear cutting surface (5) to form a cutting micro edge (16); and the micro-strengthening stress extension table is intersected with the rear cutting surface (5) to form a side micro edge (19).

6. The twist drill with the alloy tool bit according to claim 1, wherein a branch hole table (23) is concavely arranged on the cutting surface (13) of the secondary cutting edge (14) on the alloy tool bit of the twist drill with the alloy tool bit in a stepwise manner from the axial center to the outer periphery; the inner side of the branch hole table (23) protrudes to form a branch cutting surface (24), the branch cutting surface (24) is intersected with the rear cutting surface (5) to form the cutting edge (6); the branch hole table (23) is intersected with the rear cutting surface (5) to form a side micro edge (19); the branch hole table (23) is intersected with the cutting surface (13) protruding on the inner side to form a branch cutting edge (26); a micro cutting surface (18) is concavely formed on the cutting surface (13) of the alloy tool bit from the secondary cutting edge (14) toward the axial center direction on the cutting surface (13) of the alloy tool bit of the twist drill with the alloy tool bit integrally; a micro-strengthening stress extension table (20) is formed on the inner side of the micro cutting surface (18) in a standing mode; the micro cutting surface (18) is intersected with the secondary cutting surface (8) on the outer periphery to form a micro cutting edge (17); the micro cutting surface (18) is intersected with the rear cutting surface (5) to form a cutting micro edge (16); and the micro-strengthening stress extension table (20) is intersected with the rear cutting surface (5) to form a side micro edge (19).

7. The twist drill with the alloy tool bit according to claim 1, wherein a branch hole table (23) is concavely arranged on the cutting surface (13) of the secondary cutting edge (14) on the alloy tool bit of the twist drill with the alloy tool bit in a stepwise manner from the axial center to the outer periphery integrally; the inner side of the branch hole table (23) protrudes to form a branch cutting surface (24), the branch cutting surface (24) is intersected with the rear cutting surface (5) to form the cutting edge (6); the branch hole table (23) is intersected with the rear cutting surface (5) to form a side micro edge (19); the branch hole table (23) is intersected with the cutting surface (13) protruding on the inner side to form a branch cutting edge (26); a micro cutting surface (18) is concavely formed on the cutting surface (13) of the alloy tool bit from the secondary cutting edge (14) toward the axial center direction on the cutting surface (13) of the alloy tool bit of the twist drill with the alloy tool bit integrally; a micro-strengthening stress extension table (20) is formed on the inner side of the micro cutting surface (18) in a standing mode; the micro cutting surface (18) is intersected with the secondary cutting surface (8) on the outer periphery to form a micro cutting edge (17); the micro cutting surface (18) is intersected with the rear cutting surface (5) to form a cutting micro edge (16); and the micro-strengthening stress extension table (20) is intersected with the rear cutting surface (5) to form a side micro edge (19).

8. The twist drill with the alloy tool bit according to any one of claims 1 to 7, wherein at least one or more notch edges are arranged on an alloy tool bit cutting edge (6) of the twist drill with the alloy tool bit; and each notch edge extends toward the rear cutting surface (5) to form a groove.

9. The twist drill with the alloy tool bit according to any one of claims 1 to 7, wherein at least one or more standing steps and at least one or more protruding rear cutting surfaces (5) are arranged on the rear cutting surface (5) where the alloy tool bit of the twist drill with the alloy tool bit is located from the axial center in such a manner that the height of the rear cutting surface (5) in the direction of an outer side edge (7) is reduced, the standing step is intersected with the cutting surface (13) at the front end in the rotating direction to form at least one or more standing step edges, and the at least one or more protruding rear cutting surfaces (5) are intersected with the cutting surface (13) at the front end in the rotating direction to form at least one or more protruding cutting edges (6).

10. The twist drill with the alloy tool bit according to any one of claims 1 to 7, wherein at least one or more standing steps and at least one or more protruding rear cutting surfaces (5) are arranged on the rear cutting surface (5) where the alloy tool bit of the twist drill with the alloy tool bit is located from the axial center in such a manner that the height of the rear cutting surface (5) in the direction of an outer side edge (7) is reduced, the at least one or more standing steps are intersected with the cutting surface (13) at the front end in the rotating direction to form at least one or more standing step edges, and the at least one or protruding rear cutting surfaces (5) are intersected with the cutting surface (13) to form at least one protruding cutting edges (6); and at least one or more notch edges are arranged on the at least one or more stepwise alloy tool bit cutting edges (6), and each notch edge extends toward the rear cutting surface to form a groove.

11. The twist drill with the alloy tool bit according to any one of claims 1 to 7, wherein the rear cutting surfaces (5) on the two sides of the front end of the alloy tool bit of the twist drill with the alloy tool bit are intersected at the axial center to form a chamfer surface (22), a chamfer edge and the chisel edge.

12. The twist drill with the alloy tool bit according to any one of claims 1 to 7, wherein cooling holes are integrally formed in the tool shank and the spiral tool body (4) of the twist drill with the alloy tool bit.

13. The twist drill with the alloy tool bit according to any one of claims 1 to 7, wherein the included angle formed by intersecting the cutting edge (6) on the outermost side of the alloy tool bit of the twist drill with the alloy tool bit (1) with the spiral secondary cutting edge (14) is an acute angle; or the included angle formed by intersecting the cutting edge (6) on the outermost side of the alloy tool bit of the twist drill with the alloy tool bit with the spiral secondary cutting edge (14) is a right angle; or the included angle formed by intersecting the cutting edge (6) on the outermost side of the alloy tool bit of the twist drill with the alloy tool bit with the spiral secondary cutting edge (14) is an obtuse angle.

14. The twist drill with the alloy tool bit according to any one of claims 1 and 3 to 7, wherein the tool shank of the twist drill with the alloy tool bit is a straight shank; or the tool shank of the twist drill with the alloy tool bit is a taper shank; and the width of a branch cutting surface (24) of the alloy tool bit is larger than or equal to one third of the radius of the twist drill with the alloy tool bit and smaller than or equal to two thirds of the radius of the twist drill with the alloy tool bit.

## Patentansprüche

1. Ein Spiralbohrer (1) mit einem Legierungswerkzeugeinsatz (31), aufweisend
einen Schaft, einen spiralförmigen Werkzeugkörper (4) und
einen Legierungswerkzeugeinsatz (31), wobei der Spiralbohrer mit dem Legierungswerkzeugeinsatz einstückig mit mindestens zwei spiralförmigen Werkzeugkörpern (4) versehen ist, die Oberfläche jedes spiralförmigen Werkzeugkörpers (4) in der Schneidrichtung eine spiralförmige Schneidfläche (13) ist, die Oberfläche auf der Außenseite der rückwärtigen spiralförmigen Schneidfläche (13) in der Drehrichtung eine spiralförmige sekundäre Schneidfläche (8) ist, die spiralförmige Schneidfläche (13) sich mit der spiralförmigen sekundären Schneidfläche (8) schneidet, um eine spiralförmige Schneidkante (14) zu bilden,
die Fläche auf der Rückseite des axialen vorderen Endes der spiralförmigen Schneidfläche (13) eine hintere Schneidfläche (5) ist, die hinteren Schneidflächen (5) auf mindestens zwei Seiten geschnitten werden, um eine Meißelkante zu bilden, die spiralförmige Schneidfläche (13) mit der hinteren Schneidfläche (5) geschnitten wird, um eine Schneidkante (6) zu bilden, und die spiralförmige sekundäre Schneidfläche (8) mit der hinteren Schneidfläche (5) geschnitten wird, um eine Seitenkante (7) zu bilden;
der Spiralbohrer mit dem Legierungswerkzeugeinsatz besteht einstückig aus dem Werkzeugschaft und dem Spiralwerkzeugkörper (4), in die vordere Spiralschneidfläche (13) des Spiralwerkzeugkörpers (4) ist eine Nut eingefräst, der Legierungswerkzeugeinsatz (31) ist einstückig auf der vorderen Spiralschneidfläche angeordnet, die Spiralschneidflächen (13) auf den beiden Seiten und eine Schneidfläche (13) des Legierungswerkzeugeinsatz jeweils in der gleichen Nut angeordnet sind, die Spiralschneidkante (14) sich zu dem Legierungswerkzeugeinsatz erstreckt, um eine sekundäre Schneidkante (14) zu bilden, und die spiralförmige sekundäre Schneidfläche (8) sich zu dem Legierungswerkzeugeinsatz erstreckt, um eine sekundäre Schneidfläche (8) zu bilden;
eine zentrale abgestufte Plattform (10) ist auf der Schneidfläche (13) nahe der axialen Mitte des Legierungswerkzeugeinsatz des Spiralbohrers angeordnet, wobei sich der Legierungswerkzeugeinsatz in einem stehenden Modus befindet;
eine zentrale abgestufte Fläche (12) ist auf der Innenseite der zentralen abgestuften Plattform (10) angeordnet, die in die Drehrichtung vorsteht;
die zentrale abgestufte Plattform (10) sich mit der hinteren Schneidfläche (5) schneidet, um eine seitliche Mikrokante (19) zu bilden;
die zentrale abgestufte Plattform (10) sich mit der zentralen abgestuften Fläche (12) schneidet, um eine zentrale Kante (11) zu bilden;
die hintere Schneidfläche (5) sich mit der zentralen abgestuften Fläche (12) schneidet, um eine mittlere Schneidkante (3) zu bilden; und
**dadurch gekennzeichnet, dass**
die Breite der zentralen gestuften Fläche (12) auf dem Legierungswerkzeugeinsatz von der axialen Mitte bis zur Schneidfläche (13) kleiner oder gleich einem Drittel des Radius des Spiralbohrers mit dem Legierungswerkzeugeinsatz ist.

2. Der Spiralbohrer mit dem Legierungswerkzeugeinsatz nach Anspruch 1, wobei ein Abzweiglochtische (23) konkav auf der Schneidfläche (13) der sekundären Schneidkante (14) auf dem Legierungswerkzeugeinsatz des Spiralbohrers mit dem Legierungswerkzeugeinsatz in schrittweise von der axialen Mitte zum Außenumfang angeordnet ist;
die Innenseite des Abzweiglochtisches (23) vorsteht, um eine Abzweigschneidfläche (24) zu bilden, die Abzweigschneidfläche (24) sich mit der hinteren Schneidfläche (5) schneidet, um die Schneidkante (6) zu bilden;
der Abzweiglochtisch (23) sich mit der hinteren Schneidfläche (5) schneidet, um eine seitliche Mikrokante (19) zu bilden;
der Abzweiglochtisch (23) mit der an der Innenseite vorstehenden Schneidfläche (13) geschnitten wird, um eine Abzweigschneidkante (26) zu bilden; und
die Zweigschneidfläche (24) von der axialen Mitte bis zur Schneidfläche (13) größer als oder gleich einem Drittel des Radius des Spiralbohrers mit dem Legierungswerkzeugeinsatz und kleiner als oder gleich zwei Drittel des Radius des Spiralbohrers mit dem Legierungswerkzeugeinsatz ist.

3. Der Spiralbohrer mit dem Legierungswerkzeugeinsatz nach Anspruch 1, wobei
eine Mikroschneidfläche (18) ist auf der Schneidfläche (13) des Legierungswerkzeugeinsatz von der sekundären Schneidkante (14) in Richtung der axialen Mittellinie auf der Schneidfläche (13) des Legierungswerkzeugeinsatz des Spiralbohrers mit dem Legierungswerkzeugeinsatz (1) konkav ausgebildet;
eine Mikro-Verstärkungs-Spannungserweiterungstabelle (20) ist auf der Innenseite der Mikroschneidfläche (18) in einem stehenden Modus ausgebildet;
die Mikroschneidfläche (18) mit der sekundären Schneidfläche (8) am Außenumfang geschnitten wird, um eine Mikroschneidkante (17) zu bilden;
die Mikroschneidfläche (18) mit der hinteren Schneidfläche (5) geschnitten wird, um eine Mikroschneidkante (16) zu bilden; und
die Mikroverfestigungsspannungsverlängerungstisch (20) mit der hinteren Schneidfläche (5) geschnitten wird, um eine Seitenmikrokante (19) zu bilden.

4. Der Spiralbohrer mit dem Legierungswerkzeugeinsatz nach Anspruch 1, wobei
auf der Schneidfläche (13) der sekundären Scheidkante (14) am Legierungswerkzeugeinsatz des Spiralbohrers mit dem Legierungswerkzeugeinsatz stufenweise von der axialen Mitte zum Außenumfang ein Abzweiglochtisches (23) einstückig konkav angeordnet ist;
die Innenseite des Abzweiglochtisches (23) vorsteht, um eine Abzweigschneidfläche (24) zu bilden, die Abzweigschneidfläche (24) sich mit der hinteren Schneidfläche (5) schneidet, um die Schneidkante (6) zu bilden;
der Abzweiglochtisch (23) sich mit der hinteren Schneidfläche (5) schneidet, um eine seitliche Mikrokante (19) zu bilden;
der Abzweiglochtisch (23) sich mit der Schneidfläche (13) schneidet, die auf der Innenseite vorsteht, um eine Abzweigschneidkante (26) zu bilden.

5. Der Spiralbohrer mit dem Legierungswerkzeugeinsatz nach Anspruch 1, wobei
eine Mikroschneidfläche (18) konkav auf der Schneidfläche (13) des Legierungswerkzeugeinsatz von der sekundären Schneidkante (14) in Richtung der axialen Mittelrichtung auf der Schneidfläche (13) des Legierungswerkzeugeinsatz des Spiralbohrers mit dem Legierungswerkzeugeinsatz einstückig ausgebildet ist;
auf der Innenseite der Mikroschneidfläche (18) im stehenden Zustand ein Mikroverfestigungsspannungsverlängerungstisch (20) ausgebildet ist;
die Mikroschneidfläche (18) wird mit der sekundären Schneidfläche (8) am Außenumfang geschnitten, um eine Mikroschneidkante (17) zu bilden;
die Mikroschneidfläche (18) mit der hinteren Schneidfläche (5) geschnitten wird, um eine Mikroschneidkante (16) zu bilden; und
der Mikroverfestigungsspannungsverlängerungstisch mit der hinteren Schneidfläche (5) geschnitten wird, um eine seitliche Mikrokante (19) zu bilden.

6. Der Spiralbohrer mit dem Legierungswerkzeugeinsatz nach Anspruch 1, wobei
auf der Schneidfläche (13) der sekundären Schneidkante (14) am Legierungswerkzeugeinsatz des Spiralbohrers mit dem Legierungswerkzeugeinsatz schrittweise von der axialen Mitte zum Außenumfang hin ein Abzweiglochtisches (23) konkav angeordnet ist;
die Innenseite des Abzweiglochtisches (23) vorsteht, um eine Abzweigschneidfläche (24) zu bilden, wobei die Abzweigschneidfläche (24) mit der hinteren Schneidfläche (5) geschnitten wird, um die Schneidkante (6) zu bilden;
der Abzweiglochtisch (23) wird mit der hinteren Schneidfläche (5) gekreuzt, um eine seitliche Mikrokante (19) zu bilden;
die Abzweiglochtabelle (23) mit der Schneidfläche (13) geschnitten wird, die auf der Innenseite vorsteht, um eine Abzweigschneidkante (26) zu bilden;
eine Mikroschneidfläche (18) konkav auf der Schneidfläche (13) des Legierungswerkzeugeinsatz von der sekundären Schneidkante (14) in Richtung der axialen Mittelrichtung auf der Schneidfläche (13) des Legierungswerkzeugeinsatz des Spiralbohrers mit dem Legierungswerkzeugeinsatz einstückig ausgebildet ist;
eine Mikroverfestigungsspannungsverlängerungstisch (20) auf der Innenseite der Mikroschneidfläche (18) in einem stehenden Modus gebildet wird;
die Mikroschneidfläche (18) mit der sekundären Schneidfläche (8) auf dem äußeren Umfang geschnitten wird, um eine Mikroschneidkante (17) zu bilden;
die Mikroschneidfläche (18) wird mit der hinteren Schneidfläche (5) geschnitten, um eine Mikroschneidkante (16) zu bilden;
und der Mikroverfestigungsspannungsverlängerungstisch (20) wird mit der hinteren Schneidfläche (5) geschnitten, um eine seitliche Mikrokante (19) zu bilden.

7. Der Spiralbohrer mit dem Legierungswerkzeugeinsatz nach Anspruch 1, wobei
ein Abzweiglochtisch (23) auf der Schneidfläche (13) der sekundäre Schneidkante (14) am Legierungswerkzeugeinsatz des Spiralbohrers mit dem Legierungswerkzeugeinsatz stufenweise von der axialen Mitte zum Außenumfang einstückig angeordnet ist;
die Innenseite des Abzweiglochtisches (23) vorsteht, um eine Abzweigschneidfläche (24) zu bilden, wobei die Abzweigschneidfläche (24) mit der hinteren Schneidfläche (5) geschnitten wird, um die Schneidkante (6) zu bilden;
der Abzweiglochtisch (23) wird mit der hinteren Schneidfläche (5) gekreuzt, um eine seitliche Mikrokante (19) zu bilden;
der Abzweiglochtisch (23) mit der auf der Innenseite vorstehenden Schneidfläche (13) geschnitten wird, um eine Abzweigschneidkante (26) zu bilden;
eine Mikroschneidfläche (18) konkav auf der Schneidfläche (13) des Legierungswerkzeugeinsatz von der sekundären Schneidkante (14) in Richtung der axialen Mittelrichtung auf der Schneidfläche (13) des Legierungswerkzeugeinsatz des Spiralbohrers mit dem Legierungswerkzeugeinsatz einstückig ausgebildet ist;
eine Mikroverfestigungsspannungsverlängerungstisch (20) auf der Innenseite der Mikroschneidfläche (18) in einem stehenden Modus gebildet wird;
die Mikroschneidfläche (18) mit der sekundären Schneidfläche (8) auf dem äußeren Umfang geschnitten wird, um eine Mikroschneidkante (17) zu bilden;
die Mikroschneidfläche (18) wird mit der hinteren Schneidfläche (5) geschnitten, um eine Mikroschneidkante (16) zu bilden;
und der Mikroverfestigungsspannungsverlängerungstisch (20) wird mit der hinteren Schneidfläche (5) geschnitten, um eine seitliche Mikrokante (19) zu bilden.

8. Der Spiralbohrer mit dem Legierungswerkzeugeinsatz nach einem der Ansprüche 1 bis 7, wobei
mindestens eine oder mehrere Kerbkanten an einer Legierungswerkzeugeinsatzschneide (6) des Spiralbohrers mit dem Legierungsmeißel angeordnet sind;
und jede Kerbkante erstreckt sich in Richtung der hinteren Schneidfläche (5), um eine Nut zu bilden.

9. Der Spiralbohrer mit dem Legierungswerkzeugeinsatz nach einem der Ansprüche 1 bis 7, wobei mindestens eine oder mehrere stehende Stufen und mindestens eine oder mehrere vorstehende hintere Schneidflächen (5) an der hinteren Schneidfläche (5), an der sich der Legierungswerkzeugeinsatz des Spiralbohrers mit dem Legierungswerkzeugeinsatz befindet, von der axialen Mitte aus so angeordnet sind, dass die Höhe der hinteren Schneidfläche (5) in Richtung einer äußeren Seitenkante (7) reduziert ist, die stehende Stufe mit der Schneidfläche (13) am vorderen Ende in der Drehrichtung geschnitten wird, um mindestens eine oder mehrere stehende Stufenkanten zu bilden, und die mindestens eine oder mehreren vorstehenden hinteren Schneidflächen (5) mit der Schneidfläche (13) am vorderen Ende in der Drehrichtung geschnitten werden, um mindestens eine oder mehrere vorstehende Schneidkanten (6) zu bilden.

10. Der Spiralbohrer mit Legierungswerkzeugeinsatz nach einem der Ansprüche 1 bis 7, wobei mindestens eine oder mehrere stehende Stufen und mindestens eine oder mehrere vorstehende hintere Schneidflächen (5) an der hinteren Schneidfläche (5), an der sich der Legierungswerkzeugeinsatz des Spiralbohrers mit dem Legierungswerkzeugeinsatz befindet, von der axialen Mitte aus so angeordnet sind, dass die Höhe der hinteren Schneidfläche (5) in Richtung einer äußeren Seitenkante (7) reduziert ist, die mindestens eine oder mehrere stehende Stufen mit der Schneidfläche (13) am vorderen Ende in Drehrichtung unter Bildung mindestens einer oder mehrerer stehender Stufenkanten geschnitten werden, und die mindestens eine oder vorstehenden hinteren Schneidflächen (5) mit der Schneidfläche (13) unter Bildung mindestens einer vorstehenden Schneidkante (6) geschnitten werden;
und mindestens eine oder mehrere Kerbkanten an den mindestens einen oder mehreren stufenweise angeordneten Schneidkanten (6) des Legierungswerkzeugeinsatz angeordnet sind und jede Kerbkante sich zur hinteren Schneidfläche hin erstreckt, um eine Nut zu bilden.

11. Der Spiralbohrer mit dem Legierungswerkzeugeinsatz nach einem der Ansprüche 1 bis 7, wobei die hinteren Schneidflächen (5) auf den beiden Seiten des vorderen Endes des Legierungswerkzeugeinsatz des Spiralbohrers mit dem Legierungswerkzeugeinsatz sich in der axialen Mitte schneiden, um eine Fasenfläche (22), eine Fasenschneide und die Meißelschneide zu bilden.

12. Der Spiralbohrer mit Legierungswerkzeugeinsatz nach einem der Ansprüche 1 bis 7, wobei in den Werkzeugschaft und den spiralförmigen Werkzeugkörper (4) des Spiralbohrers mit dem legierten Werkzeugeinsatz Kühlbohrungen eingearbeitet sind.

13. Der Spiralbohrer mit dem Legierungswerkzeugeinsatz nach einem der Ansprüche 1 bis 7, wobei
der eingeschlossene Winkel, der dadurch gebildet wird, dass die Schneidkante (6) an der äußersten Seite des Legierungswerkzeugeinsatz des Spiralbohrers mit dem Legierungswerkzeugeinsatz (1) mit der spiralförmigen sekundären Schneidkante (14) geschnitten wird, ein spitzer Winkel ist; oder
der eingeschlossene Winkel, der durch das Schneiden der Schneide (6) auf der äußersten Seite des Legierungswerkzeugeinsatz des Spiralbohrers mit dem Legierungswerkzeugeinsatz mit der spiralförmigen sekundären Schneidkante (14) gebildet wird, ein rechter Winkel ist; oder
der eingeschlossene Winkel, der durch das Schneiden der Schneide (6) auf der äußersten Seite des Legierungswerkzeugeinsatz des Spiralbohrers mit dem Legierungswerkzeugeinsatz mit der spiralförmigen sekundären Schneidkante (14) gebildet wird, ein stumpfer Winkel ist.

14. Der Spiralbohrer mit Legierungswerkzeugeinsatz nach einem der Ansprüche 1 und 3 bis 7, wobei
der Werkzeugschaft des Spiralbohrers Legierungswerkzeugeinsatz ist ein Zylinderschaft;
oder der Werkzeugschaft Spiralbohrers mit dem Legierungswerkzeugeinsatz ist ein Kegelschaft; und
die Breite einer Zweigschneidfläche (24) des Legierungswerkzeugeinsatz größer oder gleich einem Drittel des Radius des Spiralbohrers mit Legierungswerkzeugeinsatz und kleiner oder gleich zwei Dritteln des Radius des Spiralbohrers mit dem Legierungswerkzeugeinsatz ist.

## Revendications

1. Un foret hélicoïdal (1) avec un embout en alliage (31), comprenant
une tige, un corps d'outil en spirale (4) et
un foret en alliage (31), dans lequel le foret hélicoïdal avec le foret en alliage est intégralement pourvu d'au moins deux corps d'outil en spirale (4), la surface de chaque corps d'outil en spirale (4) dans la direction de coupe est une surface de coupe en spirale (13), la surface sur le côté extérieur de la surface de coupe en spirale arrière (13) dans la direction de rotation est une surface de coupe secondaire en spirale (8), la surface de coupe en spirale (13) est coupée avec la surface de coupe secondaire en spirale (8) pour former une arête de coupe en spirale (14),
la surface sur le côté arrière de l'extrémité avant axiale de la surface de coupe en spirale (13) est une surface de coupe arrière (5), les surfaces de coupe arrière (5) sur au moins deux côtés sont coupées pour former un bord de ciseau, la surface de coupe en spirale (13) est coupée avec la surface de coupe arrière (5) pour former un bord de coupe (6), et la surface de coupe secondaire en spirale (8) est coupée avec la surface de coupe arrière (5) pour former un bord latéral (7) ;
Le foret hélicoïdal avec le foret en alliage est intégralement composé de la tige de l'outil et du corps du foret hélicoïdal (4), une rainure est fraisée sur la surface de coupe hélicoïdale avant (13) du corps du foret hélicoïdal (4), le foret en alliage (31) est intégralement disposé sur la surface de coupe hélicoïdale avant, les surfaces de coupe en spirale (13) des deux côtés et une surface de coupe (13) du panneton en alliage sont disposées respectivement dans la même rainure, l'arête de coupe en spirale (14) s'étend jusqu'au panneton en alliage pour former une arête de coupe secondaire (14), et la surface de coupe secondaire en spirale (8) s'étend jusqu'au panneton en alliage pour former une surface de coupe secondaire (8) ;
une plate-forme centrale en gradins (10) est disposée sur la surface de coupe (13) près du centre axial de l'outil en alliage du foret hélicoïdal avec l'outil en alliage en mode debout;
une surface centrale en gradins (12) est disposée sur le côté intérieur de la plate-forme centrale en gradins (10) faisant saillie dans la direction de la rotation ;
la plate-forme centrale en gradins (10) est coupée par la surface de coupe arrière (5) pour former un micro-bord latéral (19) ;
la plate-forme centrale en gradins (10) est coupée par la surface centrale en gradins (12) pour former un bord central (11) ;
la surface de coupe arrière (5) est coupée par la surface centrale en gradins (12) pour former un bord médian de coupe (3) ; et
se **caractérise par le fait que**
la largeur de la surface centrale étagée (12) sur le foret en alliage, du centre axial à la surface de coupe (13), est inférieure ou égale à un tiers du rayon du foret hélicoïdal avec le foret en alliage.

2. Le foret hélicoïdal en alliage selon la revendication 1,
dans lequel une table à trous à branches (23) est disposée de manière concave sur la surface de coupe (13) de l'arête de coupe secondaire (14) sur le foret en alliage de la perceuse hélicoïdale avec le foret en alliage à d'une manière progressive du centre axial à la périphérie extérieure ;
le côté intérieur de la table à trous à branches (23) fait saillie pour former une surface de coupe de dérivation (24), la surface de coupe de dérivation (24) est coupée par la surface de coupe arrière (5) pour former l'arête de coupe (6) ;
la table à trous à branches (23) est coupée par la surface de coupe arrière (5) pour former un micro bord latéral (19) ;
la table à trous à branches (23) est coupée par la surface de coupe (13) faisant saillie sur le côté intérieur pour former une arête de coupe (26) ; et
la surface de coupe de la branche (24) entre le centre axial et la surface de coupe (13) est supérieure ou égale à un tiers du rayon du foret hélicoïdal avec le foret en alliage et inférieure ou égale à deux tiers du rayon du foret hélicoïdal avec le foret en alliage.

3. Le foret hélicoïdal avec mèche en alliage selon la revendication 1, dans lequel
une micro surface de coupe (18) est formée de manière concave sur la surface de coupe (13) du foret en alliage à partir de l'arête de coupe secondaire (14) vers la direction du centre axial sur la surface de coupe (13) du foret en alliage du foret hélicoïdal avec l'arête de coupe en alliage (1) ;
une table d'extension de contrainte de micro renforcement (20) est formée sur le côté intérieur de la micro surface de coupe (18) dans un mode debout ;
la micro surface de coupe (18) est coupée par la surface de coupe secondaire (8) sur la périphérie extérieure pour former une micro arête de coupe (17) ;
la micro surface de coupe (18) est coupée par la surface de coupe arrière (5) pour former une micro arête de coupe (16) ;
et la table d'extension des contraintes de micro renforcement (20) est coupée par la surface de coupe arrière (5) pour former une micro arête latérale (19).

4. Le foret hélicoïdal avec embout en alliage selon la revendication 1, dans lequel une table à trous à branches (23) est disposée de manière concave sur la surface de coupe (13) de l'arête de coupe secondaire (14) sur l'embout en alliage du foret hélicoïdal avec l'embout en progressivement du centre axial à la périphérie extérieure dans son ensemble ;
Le côté intérieur de la table à trous à branches (23) fait saillie pour former une surface de coupe de dérivation (24), la surface de coupe de dérivation (24) est coupée par la surface de coupe arrière (5) pour former le bord de coupe (6) ;
la table à trous à branches (23) est coupée par la surface de coupe arrière (5) pour former un micro bord latéral (19) ;
la table à trous à branches (23) est coupée par la surface de coupe (13) faisant saillie sur le côté intérieur pour former un bord de coupe de dérivation (26).

5. Le foret hélicoïdal avec mèche en alliage selon la revendication 1, dans lequel
une micro surface de coupe (18) est formée de manière concave sur la surface de coupe (13) du foret en alliage à partir de l'arête de coupe secondaire (14) vers la direction du centre axial sur la surface de coupe (13) du foret en alliage du foret hélicoïdal avec le foret en alliage dans son ensemble ;
une table d'extension des contraintes de micro-renforcement (20) est formée sur le côté intérieur de la surface de micro-coupe (18) en mode debout ;
la surface de micro-coupe (18) est coupée par la surface de coupe secondaire (8) sur la périphérie extérieure pour former une arête de micro-coupe (17) ;
la micro surface de coupe (18) est en intersection avec la surface de coupe arrière (5) pour former une micro arête de coupe (16) ; et la table d'extension des contraintes de micro renforcement est en intersection avec la surface de coupe arrière (5) pour former une micro arête latérale (19).

6. Le foret hélicoïdal en alliage selon la revendication 1, dans lequel
une table à trous à branches (23) est disposée de manière concave sur la surface de coupe (13) de l'arête de coupe secondaire (14) sur le foret en alliage de la perceuse hélicoïdale avec le foret en alliage progressivement du centre axial à la périphérie extérieure ;
le côté intérieur de la table à trous à branches (23) fait saillie pour former une surface de coupe (24), la surface de coupe (24) est coupée par la surface de coupe arrière (5) pour former l'arête de coupe (6) ;
la table à trous à branches (23) est coupée par la surface de coupe arrière (5) pour former un micro bord latéral (19) ;
la table des trous à branches (23) est coupée par la surface de coupe (13) faisant saillie sur le côté intérieur pour former une arête de coupe de dérivation (26) ;
une micro surface de coupe (18) est formée de manière concave sur la surface de coupe (13) du foret en alliage à partir de l'arête de coupe secondaire (14) vers la direction du centre axial sur la surface de coupe (13) du foret en alliage du foret hélicoïdal avec le foret en alliage dans son ensemble ;
une table d'extension des contraintes de micro-renforcement (20) est formée sur le côté intérieur de la surface de micro-coupe (18) en mode debout ;
la surface de micro-coupe (18) est coupée par la surface de coupe secondaire (8) sur la périphérie extérieure pour former une arête de micro-coupe (17) ;
la micro surface de coupe (18) est coupée par la surface de coupe arrière (5) pour former une micro arête de coupe (16) ;
et la table d'extension de la contrainte de micro-renforcement (20) est coupée par la surface de coupe arrière (5) pour former un micro-bord latéral (19).

7. Le foret hélicoïdal en alliage selon la revendication 1, dans lequel
une table à trous à branches (23) est disposée de manière concave sur la surface de coupe (13) de l'arête de coupe secondaire (14) sur le foret en alliage de la perceuse hélicoïdale avec le foret en alliage progressivement du centre axial à la périphérie extérieure dans son ensemble ;
le côté intérieur de la table à trous (23) fait saillie pour former une surface de coupe (24), la surface de coupe (24) est coupée par la surface de coupe arrière (5) pour former l'arête de coupe (6) ;
la table à trous (23) est coupée par la surface de coupe arrière (5) pour former un micro bord latéral (19) ;
la table à trous à branches (23) est coupée par la surface de coupe (13) faisant saillie sur le côté intérieur pour former une arête de coupe de branchement (26) ;
une micro surface de coupe (18) est formée de manière concave sur la surface de coupe (13) du foret en alliage à partir de l'arête de coupe secondaire (14) vers la direction du centre axial sur la surface de coupe (13) du foret en alliage du foret hélicoïdal avec le foret en alliage dans son ensemble ;
une table d'extension des contraintes de micro-renforcement (20) est formée sur le côté intérieur de la surface de micro-coupe (18) en mode debout ;
la surface de micro-coupe (18) est coupée par la surface de coupe secondaire (8) sur la périphérie extérieure pour former une arête de micro-coupe (17) ;
la micro surface de coupe (18) est coupée par la surface de coupe arrière (5) pour former une micro arête de coupe (16) ;
et la table d'extension des contraintes de micro-renforcement (20) est coupée par la surface de coupe arrière (5) pour former un micro-bord latéral (19).

8. Le foret hélicoïdal avec embout en alliage selon l'une quelconque des revendications 1 à 7, dans lequel
au moins une ou plusieurs encoche d'entaille sont disposées sur une arête de coupe du foret en alliage (6) du foret hélicoïdal avec le foret en alliage ;
et chaque bord de l'encoche s'étend vers la surface de coupe arrière (5) pour former une rainure.

9. Le foret hélicoïdal avec embout en alliage selon l'une quelconque des revendications 1 à 7, dans lequel au moins une ou plusieurs marches debout et au moins une ou plusieurs surfaces de coupe arrière en saillie (5) sont disposées sur la surface de coupe arrière (5) où le foret en alliage du foret hélicoïdal avec le foret en alliage est situé à partir du centre axial de manière à réduire la hauteur de la surface de coupe arrière (5) dans la direction d'un bord latéral extérieur (7), la marche debout est recoupée avec la surface de coupe (13) à l'extrémité avant dans le sens de rotation pour former au moins une ou plusieurs marches debout, et au moins une ou plusieurs surfaces de coupe arrière saillantes (5) sont recoupées avec la surface de coupe (13) à l'extrémité avant dans le sens de rotation pour former au moins une ou plusieurs marches debout saillantes (6).

10. Le foret hélicoïdal avec embout en alliage selon l'une quelconque des revendications 1 à 7, dans lequel
au moins une ou plusieurs marches debout et au moins une ou plusieurs surfaces de coupe arrière en saillie (5) sont disposées sur la surface de coupe arrière (5) où le foret en alliage du foret hélicoïdal avec le foret en alliage est situé à partir du centre axial de manière à réduire la hauteur de la surface de coupe arrière (5) dans la direction d'un bord latéral extérieur (7), au moins une ou plusieurs marches debout sont croisées avec la surface de coupe (13) à l'extrémité avant dans la direction de rotation pour former au moins une ou plusieurs arêtes de marches debout, et au moins une ou plusieurs surfaces de coupe arrière en saillie (5) sont croisées avec la surface de coupe (13) pour former au moins une arête de coupe en saillie (6) ; et
au moins une ou plusieurs arêtes d'encoche sont disposées progressivement sur au moins une ou plusieurs arêtes de coupe des mèches en alliage (6) et chaque arête d'encoche s'étend vers la surface de coupe arrière pour former une rainure.

11. Le foret hélicoïdal avec embout en alliage selon l'une quelconque des des revendications 1 à 7, dans lequel les surfaces de coupe arrière (5) sur les deux côtés de l'extrémité avant du foret en alliage du foret hélicoïdal avec le foret en alliage sont coupées au centre axial pour former une surface de chanfrein (22), une arête de chanfrein et l'arête de ciseau.

12. Le foret hélicoïdal avec embout en alliage selon l'une quelconque des revendications 1 à 7, dans lequel les trous de refroidissement sont formés intégralement dans la tige de l'outil et dans le corps de l'outil en spirale (4) de la perceuse hélicoïdale avec le foret en alliage.

13. Le foret hélicoïdal avec embout en alliage selon l'une quelconque des revendications 1 à 7,
l'angle inclus formé par l'intersection de l'arête de coupe (6) sur le côté extérieur de la mèche en alliage du foret hélicoïdal avec la mèche en alliage (1) avec l'arête de coupe secondaire en spirale (14) est un angle aigu ; soit
l'angle inclus formé par l'intersection de l'arête de coupe (6) du côté extérieur du foret en alliage du foret hélicoïdal avec l'arête de coupe secondaire en spirale (14) est un angle droit ; soit
l'angle inclus formé par l'intersection de l'arête de coupe (6) du côté extérieur du foret en alliage du foret hélicoïdal avec l'arête de coupe secondaire en spirale (14) est un angle obtus.

14. Le foret hélicoïdal avec embout en alliage selon l'une quelconque des revendications 1 et 3 à 7, dans lequel
la tige du foret hélicoïdal avec le foret en alliage est une tige droite ;
ou la tige du foret hélicoïdal avec le foret en alliage est une tige conique ; et
la largeur de la surface de coupe de la branche (24) du foret en alliage est supérieure ou égale à un tiers du rayon du foret hélicoïdal avec le foret en alliage et inférieure ou égale à deux tiers du rayon du foret hélicoïdal avec le foret en alliage.
